# EUROPEAN PATENT APPLICATION

(11) **EP 4 488 623 A1**
(43) Date of publication of application: **08.01.2025**
(21) Application number: 22929844.3
(22) Date of filing: 04.03.2022
(51) Int. Cl.: G01C 3/06, G01S 17/10, G01S 17/66, G01S 17/89

(54) **INFORMATION PROCESSING DEVICE, CONTROL METHOD, PROGRAM, AND STORAGE MEDIUM**

(71) Applicant: Pioneer Corporation, Tokyo 113-0021 (JP); Pioneer Smart Sensing Innovations Corporation, Tokyo 113-0021 (JP)
(72) Inventor: KURAHASHI, Makoto, Kawagoe-shi, Saitama 350-8555 (JP)
(74) Representative: Viering, Jentschura & Partner mbB Patent- und Rechtsanwälte
(86) International application number: PCT/JP2022/009381
(87) International publication number: WO 2023/166700

(57) **Abstract**

The controller 13 of the information processing device 1 mainly functions as a first acquisition unit, a second acquisition unit, and an object detection unit. The first acquisition unit is configured to acquire point cloud data which is a set of data for each point measured by a measurement device. The second acquisition unit is configured to acquire movement region information regarding regions where objects moves on a horizontal plane in a measurement range of the measurement device. The object detection unit is configured to detect, based on the movement region information, a cluster of data for each object from the point cloud data.

## Description

### TECHNICAL FIELD

The present disclosure relates to processing of measured data.

### BACKGROUND

Conventionally, there is known a laser radar device configured to radiate a pulse of laser light into a target space of detection and detect an object in the target space based on the level of the reflection light. For example, Patent Literature 1 discloses a lidar configured to scan the peripheral space by appropriately controlling the emission direction (scanning direction) of the light pulse to be repeatedly emitted and measure the return light thereby to generate point cloud data indicating peripheral object information such as distance information and reflectance information. Further, Patent Literature 2 discloses a technique of an object tracking process by detecting, based on the point cloud data, an object bounding box surrounding an object and associating time-series object bounding boxes.

### PRIOR ART DOCUMENTS

### PATENT LITERATURE

Patent Literature 1: JP2018-009831A
Patent Literature 2: JP2020-042800A

### SUMMARY

### PROBLEM TO BE SOLVED BY THE INVENTION

When detecting an object based on point cloud data obtained by measuring the object, there is a possibility that data obtained by measuring an object is associated with the data obtained by measuring another object erroneously as the same object.

The present disclosure has been made to solve the above issues, and it is an object of the present invention to provide an information processing device capable of appropriately associating the measured data with the object.

### MEANS FOR SOLVING THE PROBLEM

One invention is an information processing device including:
a first acquisition unit configured to acquire point cloud data, which is a set of data for each point measured by a measurement device;
a second acquisition unit configured to acquire movement region information regarding movement regions where objects move on a horizontal plane in a measurement range of the measurement device; and
an object detection unit configured to detect, based on the movement region information, a cluster of the data for each object from the point cloud data.

Another invention is a control method executed by a computer, the control method including:
acquiring point cloud data, which is a set of data for each point measured by a measurement device;
acquiring movement region information regarding movement regions where objects move on a horizontal plane in a measurement range of the measurement device; and
detecting, based on the movement region information, a cluster of the data for each object from the point cloud data.

Still another invention is a program causing a computer to:
acquire point cloud data, which is a set of data for each point measured by a measurement device;
acquire movement region information regarding movement regions where objects move on a horizontal plane in a measurement range of the measurement device; and
detect, based on the movement region information, a cluster of the data for each object from the point cloud data.

### BRIEF DESCRIPTION OF THE DRAWINGS

[FIG. 1] It illustrates a schematic configuration of a lidar unit common to each embodiment.
[FIG. 2] It illustrates an example of installing a lidar.
[FIG. 3] It is a block diagram showing an example of a hardware configuration of an information processing device.
[FIG. 4] It is an example of a flowchart showing an outline of a process that the controller executes in the first embodiment.
[FIG. 5] It is a diagram showing a lane region based on the lane map, and segments detected on the lane.
[FIG. 6] It is an example of a flowchart showing a detailed procedure of the tracked object detection process.
[FIG. 7] It is a diagram showing a lane region based on the lane map and segments detected on the lane.
[FIG. 8] It is an example of a flowchart showing a detailed procedure of the new object detection process.
[FIG. 9] It is a block diagram showing an example of a hardware configuration of the information processing device according to the second embodiment.
[FIG. 10] It illustrates a two-dimensional space viewed from directly above wherein the track of the movement of a tracked object is indicated by an arrow on virtual grids.
[FIGS. 11A and 11B] FIG. 11A illustrates an enlarged view of a grid cell where a moving direction of the tracked object is indicated by an arrow.
FIG. 11B illustrates a histogram obtained by aggregating the movement directions in the grid cell.
[FIG. 12] It is a diagram showing a movement direction and the frequency in each grid cell ranging in the field of view.
[FIGS. 13A and 13B] FIG. 13A is a diagram showing an outline of a first determination method of the boundary of the lane.
FIG. 13B is a diagram showing an outline of a second determination method of the boundary of the lane.

### DETAILED DESCRIPTION OF PREFERRED EMBODIMENTS

According to a preferred embodiment of the present invention, the information processing device includes: a first acquisition unit configured to acquire point cloud data, which is a set of data for each point measured by a measurement device; a second acquisition unit configured to acquire movement region information regarding movement regions where objects move on a horizontal plane in a measurement range of the measurement device; and an object detection unit configured to detect, based on the movement region information, a cluster of the data for each object from the point cloud data. According to this embodiment, based on the movement region information, the information processing device can accurately detect a cluster of data for each object from the point cloud data.

In one aspect of the information processing device, the object detection unit is configured to prohibit the data existing on different movement regions from being detected as the cluster representing a same object. According to this aspect, the information processing device can suitably prevent the data of different objects from being detected as a cluster of data representing a single object.

In another aspect of the information processing device, the movement regions are lanes, wherein the object detection unit is configured to prohibit the data existing on different lanes from being detected as the cluster representing the same object. According to this aspect, the information processing device can suitably prevent the data existing across lanes from being detected as a cluster of data representing a single object.

In still another aspect of the information processing device, if a moving direction of a first lane and a moving direction of a second lane indicated by the movement region information are different, the object detection unit is configured to prohibit the data on the first lane and the data on the second lane from being detected as the cluster representing the same object. According to this aspect, the information processing device can suitably prevent the data existing across an oncoming lane from being detected as a cluster of data representing a single object.

In still another aspect of the information processing device, in a case of detecting, based on a predicted position of a tracked object detected at a past processing time, the cluster corresponding to the tracked object at a current processing time, the object detection unit is configured to exclude the data existing in a different movement region from the predicted position and detect the cluster. According to this aspect, the information processing device prevents the data existing in the movement region different from the predicted position of a tracked object from being detected as the tracked object to thereby perform an object tracking with high accuracy.

In still another aspect of the information processing device, in a case of detecting, based on the data which does not corresponds to an object detected at a past processing time, the cluster corresponding to another object newly detected at a current processing time, the object detection unit is configured to prohibit the data existing on different movement regions from being detected as the cluster representing the same object. According to this aspect, the information processing device can appropriately determine a cluster of data corresponding to an object not detected at the past processing time.

In still another aspect of the information processing device, the information processing device further includes a segment extraction unit configured to extract segments representing sets of data, wherein the object detection unit is configured to detect one or more segments for each object as the cluster. According to this aspect, the information processing device can suitably detect a cluster of data for each object from the point cloud data.

According to another preferred embodiment of the present invention, the information processing device includes: an acquisition unit configured to acquire point cloud data, which is a set of data for each point measured by a measurement device; a first generation unit configured to generate movement history information for each position on a horizontal plane in a measurement range of the measurement device, the movement history information indicating moving directions of objects, which passed through the each position, at the each position; and a second generation unit configured to generate, based on the movement history information, the above-mentioned movement region information. The information processing device according to this embodiment can suitably generate movement history information which is useful for detection of a cluster of data representing an object.

According to still another preferred embodiment of the present invention, there is provided a control method executed by a computer, the control method including: acquiring point cloud data, which is a set of data for each point measured by a measurement device; acquiring movement region information regarding movement regions where objects move on a horizontal plane in a measurement range of the measurement device; and detecting, based on the movement region information, a cluster of the data for each object from the point cloud data. The computer can accurately detect the cluster of data for each object from the point cloud data by executing this control method.

According to still another preferred embodiment of the present invention, there is provided a program causing a computer to: acquire point cloud data, which is a set of data for each point measured by a measurement device; acquire movement region information regarding movement regions where objects move on a horizontal plane in a measurement range of the measurement device; and detect, based on the movement region information, a cluster of the data for each object from the point cloud data. By executing this program, the computer can accurately detect the cluster of data for each object from the point cloud data. In some embodiments, the program is stored in a storage medium.

### EMBODIMENTS

Hereinafter, each preferred embodiment of the present invention is described below with reference to drawings.

### (1) Overview of Lidar Unit

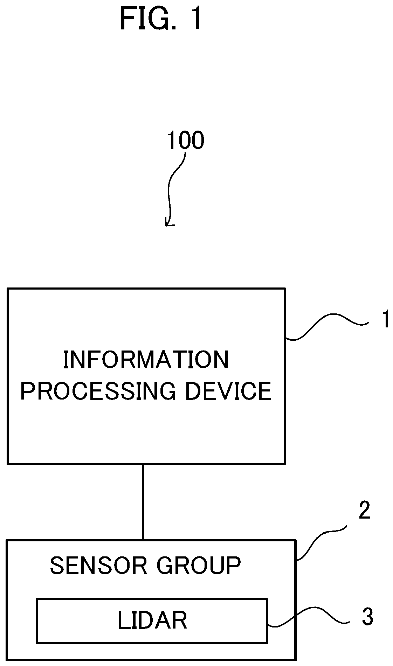

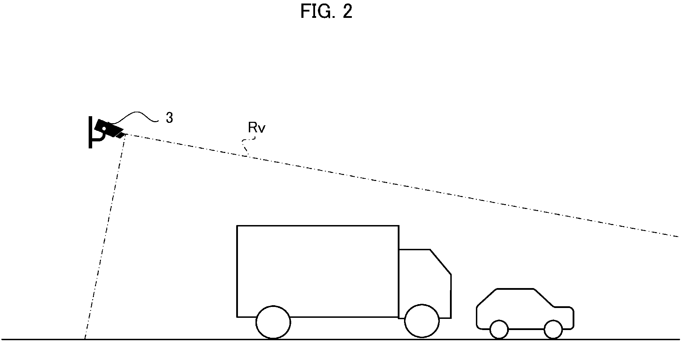

FIG. 1 is a schematic configuration of a lidar unit 100 common to each embodiment. The lidar unit 100 includes an information processing device 1 that performs processing related to data generated by a sensor group 2, and the sensor group 2 including at least a lidar (Lidar: Light Detection and Ranging, or Laser Illuminated Detection and Ranging) 3. FIG. 2 illustrates an installation example of the lidar 3. The lidar 3 shown in FIG. 2 is installed so as to include a roadway in the field of view "Rv" which is the measurable range by the lidar 3. In practice, the field of view Rv ranges according to the maximal measurement distance of the lidar 3. The lidar unit 100 detects an object and outputs information regarding the detection result of the object.

The information processing device 1 is electrically connected to the sensor group 2 and processes data outputted by various sensors included in the sensor group 2. In the present embodiment, based on the point cloud data output by the lidar 3, the information processing device 1 performs process of detecting an object. The process of detecting the object includes a process of estimating the state of the object, such as a position estimation of the object, and a process of tracking the object. For example, the information processing device 1 is fixedly installed in a condition of being accommodated in a housing together with the lidar 3. The information processing device 1 may be provided integrally with the lidar 3 as an electronic control device of the lidar 3 or may be provided at a position away from the lidar 3 in a state where it can communicate with the lidar 3.

The lidar 3 discretely measures the distance to an external object by emitting a pulse laser which is an infrared laser while changing the emitting angle within a predetermined angle range in the horizontal and vertical directions. In this case, the lidar 3 is equipped with a radiation unit for radiating a laser light while changing the irradiation direction (i.e., the scanning direction), a light receiving unit for receiving the reflected light (scattered light) of the radiated laser light, and an output unit for outputting data based on the received light signal outputted by the light receiving unit. Then, the lidar 3 generates point cloud data using the lidar 3 as a reference point, wherein the point cloud data indicates, for each measurement direction (i.e., each emitting direction of the pulse laser), the distance (measurement distance) to the object irradiated with the pulsed laser and the received light intensity (reflection intensity value) of the reflected light. In this case, the lidar 3 calculates, as the time of flight (Time of Flight) of light, the time length from the time of the emission of the pulsed laser until the time of detection of the reflected light by the light receiving unit, and then determines the measurement distance according to the calculated time of flight. Hereafter, point cloud data obtained by one cycle of measurement to the entire field of view Rv is also referred to as a frame of point cloud data.

The point cloud data can be regarded as an image in which each pixel corresponds to each measurement direction and the pixel value corresponds to the reflection intensity value in each measurement direction. In this case, the emitting direction of the pulse laser in the elevation / depression angle varies along the vertical direction of the pixels and the emitting direction of the pulse laser in the horizontal angle varies along the horizontal direction of the pixel. Then, for each pixel, the coordinate value in the three-dimensional coordinate system with reference to the lidar 3 is obtained based on the corresponding set of the emitting direction and the measurement distance. Hereafter, this coordinate value is denoted as (x, y, z), and the combination of the x-coordinate and the y-coordinate represents the position in the horizontal direction, and the z-coordinate represents the position in the height direction.

The lidar 3 is not limited to the above-described scan type lidar and may be a flash type lidar configured to generate three-dimensional data by diffusing and radiating a laser light to the field of view of the two-dimensional sensor array. Hereafter, the point (and its measurement data) measured through irradiation with the pulse laser emitted by the radiation unit is also referred to as "measured point". The lidar 3 is an example of the "measurement device" in the present invention.

The sensor group 2 may include various external or/and internal sensors in addition to lidar 3. For example, the sensor group 2 may include a GNSS (Global Navigation Satellite System) receiver or the like required to generate the position data.

### (2) Configuration of Information Processing Device

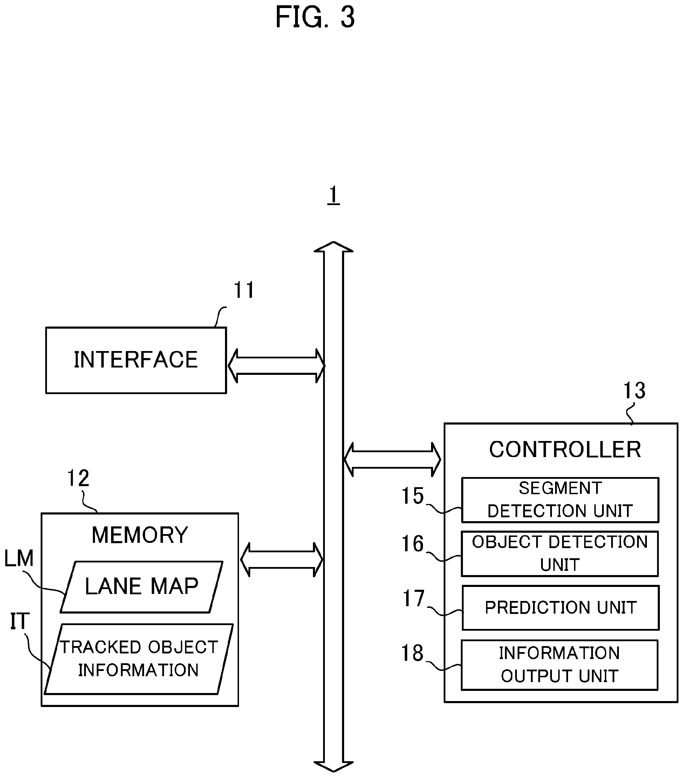

FIG. 3 is a block diagram illustrating an example of a hardware configuration of the information processing device 1 according to the first embodiment. The information processing device 1 mainly includes an interface 11, a memory 12, and a controller 13. Each of these elements is connected to each other through a bus line.

The interface 11 performs the interface operation related to the transfer of data between the information processing device 1 and an external device. In this example, the interface 11 acquires the output data from the sensor group 2 such as a lidar 3, and supplies the controller 13 with the data. Examples of the interface 11 include a wireless interface, such as a network adapter, for performing wireless communication, and a hardware interface, such as a cable, for connecting to an external device. The interface 11 may also perform interface operations with various peripheral devices such as an input device, a display device, a sound output device, and the like.

The memory 12 is configured by various volatile and non-volatile memories such as a RAM (Random Access Memory), a ROM (Read Only Memory), a hard disk drive, and a flash memory, and the like. The memory 12 stores a program for the controller 13 to perform a predetermined process. The program executed by the controller 13 may be stored in a storage medium other than the memory 12.

The memory 12 also stores information necessary for the controller 13 to perform a predetermined process. For example, in the present embodiment, the memory 12 stores the lane map LM and the tracked object information IT.

The lane map LM is a map that represents the position of a lane and the moving direction on the lane. For example, the lane map LM includes data indicating whether or not each grid cell constitutes a lane, wherein the grid cells are defined as virtual grids obtained by applying mesh division at predetermined intervals to each dimension of the two-dimensional space on the horizontal plane. In addition, the lane map LM further includes the identification information (lane ID) of the lane and the information indicating the moving direction in association with the grid cell which is determined as the lane. In this case, a common lane ID may be assigned to lanes in the same direction in the case of plural lanes in each direction, or different lane IDs may be assigned to different lanes in the same direction. The lane map LM may be a part of the map data or may be generated based on the second embodiment described below.

The tracked object information IT is information indicating the tracking result of an object outputted by the information processing device 1 and is generated or updated at every frame cycle. For example, the tracked object information IT includes identification information (tracked object ID) assigned to an object (also referred to as "tracked object") which was tracked or is being tracked by the information processing device 1. Here, if the same tracked object is detected at different processing times, the tracked object is identified by the same tracked object ID. The tracked object information IT includes, for example, time information indicative of the detection time of the tracked object, position information of the tracked object, and classification information of the tracked object, in addition to the tracked object ID described above.

The controller 13 includes one or more processors, such as a CPU (Central Processing Unit), a GPU (Graphics Processing Unit), and a TPU (Tensor Processing Unit), and controls the entire information processing unit 1. In this case, the controller 13 executes a program stored in the memory 12 or the like to perform various processing described later. The controller 13 functionally includes a segment detection unit 15, an object detection unit 16, a prediction unit 17, and an information output unit 18.

The segment detection unit 15 extracts a mass (also referred to as "segment") of data indicating neighboring positions from the point cloud data generated at the frame cycle corresponding to the current processing time. In this case, the segment detection unit 15 extracts one or more segments from the point cloud data on the basis of an arbitrary clustering technique such as, for example, Euclidean Clustering. Further, as the preprocessing of the segment extraction described above, the segment detection unit 15 performs the process of removing the data of the measured points (so-called background points or stationary points) corresponding to a stationary object from the point cloud data, and, the process of removing the data of the measured points (so-called noise points) corresponding to noise from the point cloud data.

The object detection unit 16 groups the segments detected by the segment detection unit 15 into one or more segments for each object and detects the one or more segments for each group as a cluster representing a tracked object. In this case, the object detection unit 16 refers to the lane map LM and performs the process (also referred to as "tracked object detection process") of detecting a cluster of segments corresponding to a tracked object that has already been detected at the past processing time, and the process (also referred to as "new object detection process") of detecting a cluster of segments corresponding to an object that has not been detected at the past processing time as a newly tracked object, respectively. The object detection unit 16 updates the tracked object data IT on the basis of the tracked object detection process and the new object detection process.

In some embodiments, the object detection unit 16 may classify the detected tracked objects and determine a class of each tracked object. The class herein indicates, for example, a type of the object that may be detected by the lidar 3, such as a vehicle (including a bicycle), a pedestrian, and a sign. In this case, the object detection unit 16 performs the above-described classification based on, for example, the size or/and the shape of the segment of the tracked object. In this case, prior information regarding the size or/and the shape for each class is stored in the memory 12 or the like in advance, and the object detection unit 16 performs classification based on the size or/and the shape of each segment by referring to the prior information. The object detection unit 16 may perform classification of the tracked object using a model that is trained on the basis of deep learning (neural network). In this case, the above-described model is trained in advance so as to output the classified class of the tracked object when point cloud data representing a segment of a tracked object is inputted to the model. Then, the object detection unit 16 may detect only objects which belong to specific class(es) (e.g., an automobile) as tracked objects. In this case, the object detection unit 16 may detect the segments representing the objects belonging to the specific class(es) as the segments representing the tracked objects and remove any segments representing objects not belonging to the specific class(es).

The prediction unit 17 predicts the position and the velocity of each tracked object registered in the tracked object information IT. In this case, for example, the prediction unit 17 acquires the prediction result of the position and the velocity of the target object from the model by inputting the representative position of the object being tracked at the current processing time into an arbitrary object tracking model. The object tracking model may be a model based on a Kalman filter, or may be a model based on deep learning. Further, the representative position in this case may be the position of the center of gravity of all segments of the object of interest, or may be the position of a specific portion of the object of interest identified after estimating the entire region of the object of interest using an object model or the like. In some embodiments, the prediction unit 17 sets a bounding box surrounding the segment(s) of the object and performs tracking on the basis of the bounding box to predict the position and the velocity of the object. The prediction unit 17 may assume that an object newly detected by the object detection unit 16 at the current processing time is moving at a predetermined speed along the moving direction of the lane on which the object exists.

The information output unit 18 outputs information regarding the objects detected by the lidar 3. In this case, for example, the information output unit 18 may output information regarding the number of objects detected during a predetermined period, or may output information regarding the position and/or speed of each of the objects. In this case, as an example of the output, the information output unit 18 may store the above-described information in the memory 12 or may transmit, through the interface 11, the information to the server device that collects the information on situations on roads.

Then, the controller 13 functions as the "first acquisition unit", the "second acquisition unit", the "segment extraction unit", the "object detection unit", and a computer or the like for executing the program.

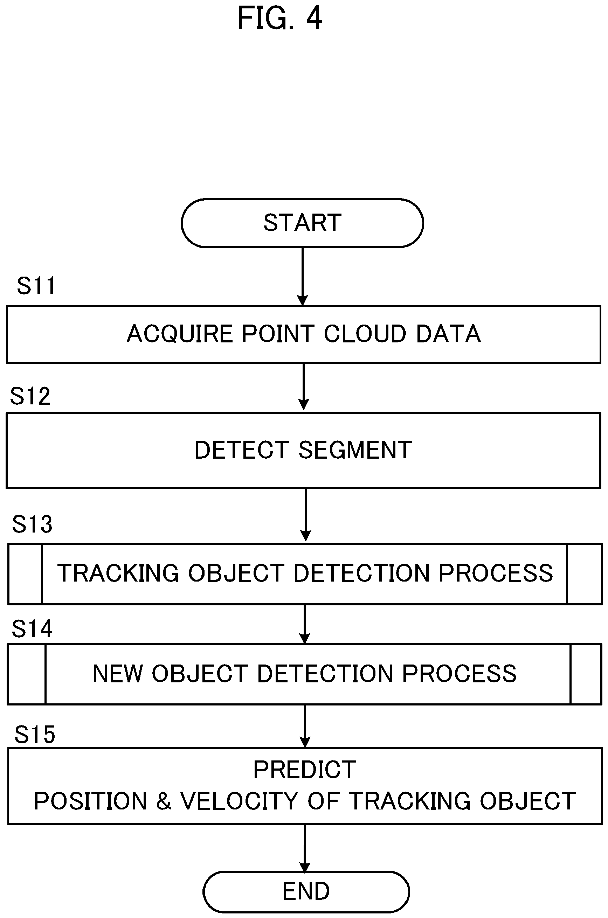

FIG. 4 is an example of a flowchart showing an outline of a process that is executed by the controller 13 in the first embodiment. The controller 13 executes the processing of the flowchart at every predetermined processing cycle (e.g., every frame cycle of the lidar 3).

The controller 13 acquires, via the interface 11, point cloud data measured by the lidar 3 (step S11). Then, the segment detection unit 15 of the controller 13 detects segments, based on the point cloud data acquired at step S11 (step S12). In this case, the segment detection unit 15 also executes the process of removing the noise points and the background points.

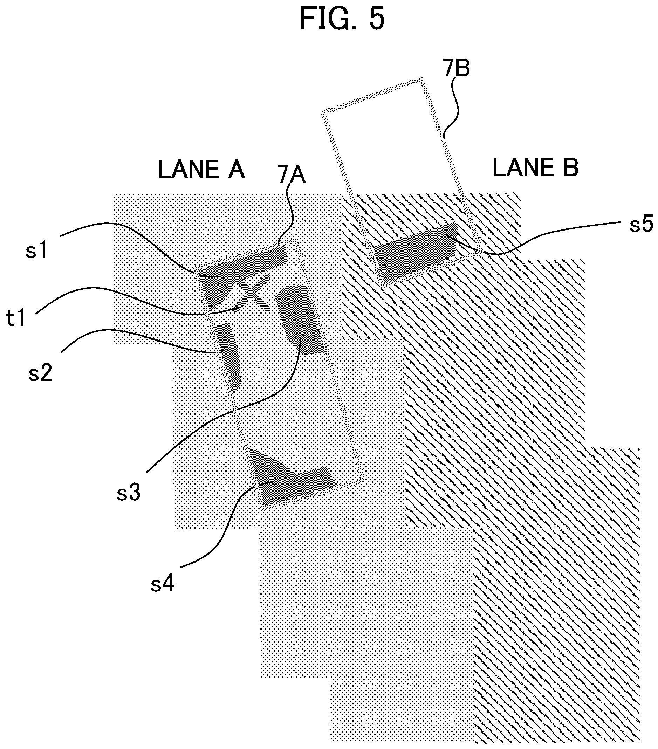

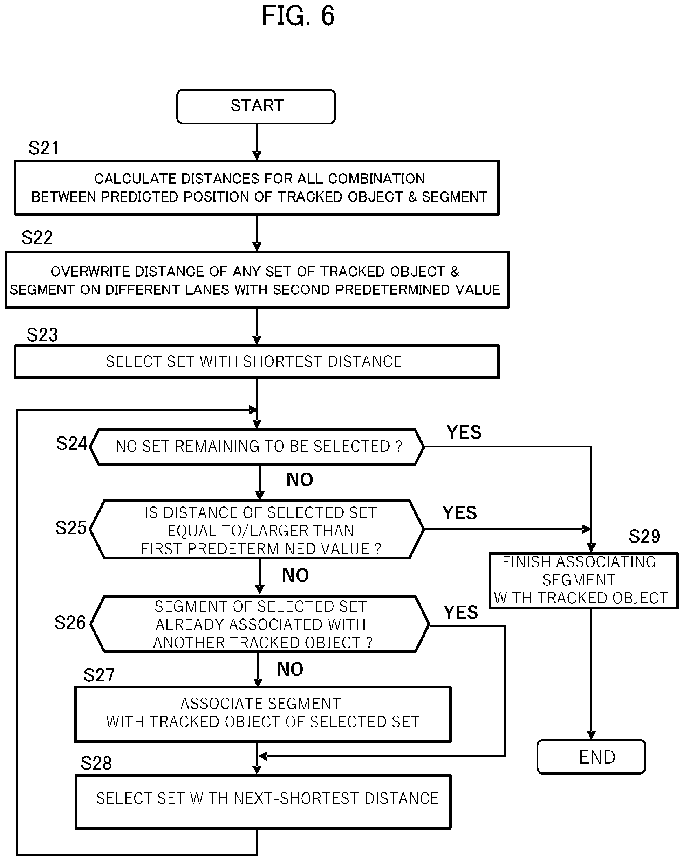

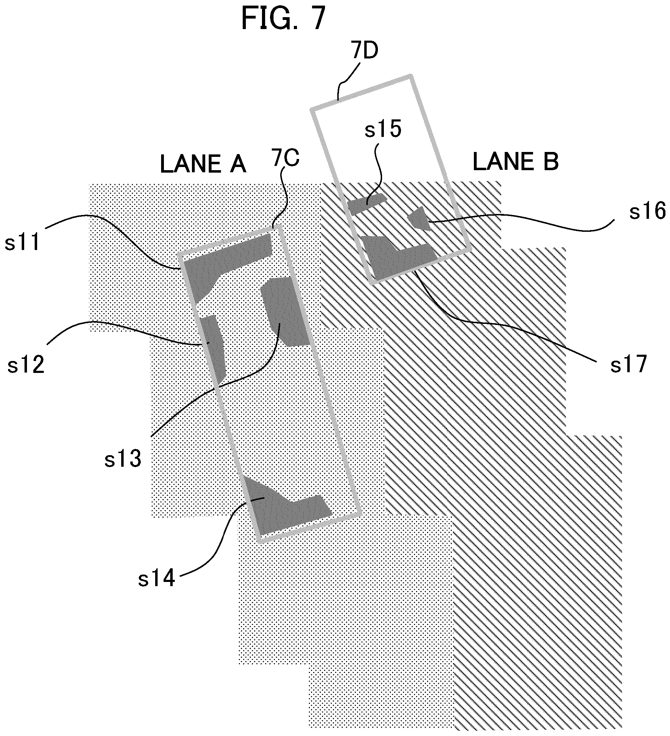

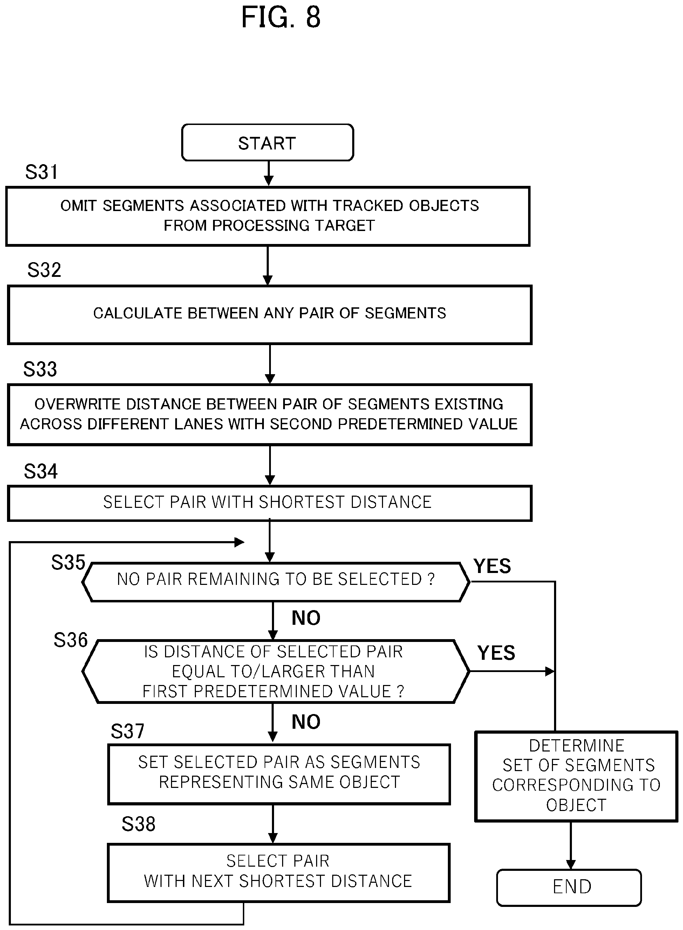

Next, based on the lane map LM, the object detection unit 16 executes the tracked object detection process (step S13). Thus, the object detection unit 16 detects clusters of segments corresponding to objects subject to tracking. If a tracked object detected at the previous processing time cannot be detected in the segments obtained at step S12, the object detection unit 16 determines that the tracked object has disappeared. The details of the tracked object detection process will be described with reference to FIGS. 5 and 6. Furthermore, the object detection unit 16 performs the new object detection process on the basis of the lane map LM (step S14). Thus, the object detection unit 16 detects a cluster of segments corresponding to an object that was not detected at the past processing time. The details of this process will be described with reference to FIGS. 7 and 8. The segments are clustered (i.e., grouped) for each object through the tracked object detection process and the new object detection process. The object detection unit 16 may perform the process of tracking only objects (for example, automobiles) belonging to specific class(es).

Next, the prediction unit 17 predicts each position and velocity of the tracked objects based on the cluster of segments for each of the tracked objects (step S15). Thereafter, the information output unit 18 performs the process of outputting information related to the prediction result by the prediction unit 17.

The process performed by the controller 13 is not limited to being implemented in software using a program, and may be implemented by any combination of hardware, firmware, and software. For example, the process performed by the controllers 13 may also be implemented using user programmable integrated circuit such as a FPGA (Field-Programmable Gate Array) and a microcomputer. In this case, the integrated circuit may be used to implement a program that the controller 13 executes in this example.

### (3) Tracked Object Detection Process

Next, the details of the tracked object detection process will be described. In the tracked object detection process, the object detection unit 16 detects a cluster of segments corresponding to each tracked object at the current processing time, based on the position of the each tracked object predicted by the prediction unit 17 at the immediately preceding processing time. In this instance, on the basis of the lane map LM, the object detection unit 16 prohibits any segment existing across a lane that is different from the lane of the predicted position of the tracked object from being detected as a tracked object. Thus, the object detection unit 16 suitably suppresses detecting a segment detected on an oncoming lane opposite to the lane in which the tracked object exists, as a part of the tracked object.

FIG. 5 is a diagram illustrating regions of lanes according to the lane map LM and segments s1 to s5 detected on the lanes. Here, a region of the lane A within the field of view Rv and a region of the lane B within the field of view Rv are illustrated, wherein the lane B is the oncoming lane (i.e., the lane in which the moving direction is the opposite direction) opposite to the lane A. There is a vehicle 7A bordered by a rectangular frame on the lane A, and there is a vehicle 7B bordered by a rectangular frame on the lane B. Here, the vehicle 7A is a tracked object that has already been detected at the past processing time, and is travelling along the direction from bottom to top, and the vehicle 7B is a new object that was not detected because it existed outside the field of view Rv at the past processing time, and is travelling along the direction from top to bottom. Further, the mark t1 represents a predicted position (in this case, a predicted representative position which is the center of the head of the vehicle) of the vehicle 7A at the current processing time predicted at the immediately preceding processing time.

In the tracked object detection process, the object detection unit 16 detects segments corresponding to the vehicle 7A that is a tracked object detected at the immediately preceding processing time based on the lane map LM. In this case, for example, the object detection unit 16 detects, as the tracked object, segments after removal of segments belonging to the oncoming lane from the segments, which exist within a predetermined distance from the predicted position of the tracked object. According to the example shown in FIG. 5, first, the object detection unit 16 detects the segments s1 to s5 existing within a predetermined distance from the predicted position (see the mark t1) of the vehicle 7A. Next, among the detected segments s1 to s5, the object detection unit 16 detects the segment s5 existing on the lane B which is different in the moving direction from the lane A, and then detects a cluster of segments representing the vehicle 7A in which the segment s5 is excluded. In this instance, the object detection unit 16 detects the segments s1 to s4 as the cluster of segments representing the vehicle 7A.

When determining the segments to be excluded based on the lane map LM, the object detection unit 16 may exclude the segments existing in the lane which is different in the moving direction from the lane on which the segment (in this case, the segment s1) closest to the predicted position exists, instead of using the lane to which the predicted position belongs as a reference. In some embodiments, the object detection unit 16 may prohibit segments existing in different lanes from being detected as a single tracked object regardless of whether the moving directions of the lanes are consistent with each other or not.

In this way, the object detection unit 16 prevents segments existing across lanes from being detected as the same tracked object, and accurately detects clusters of segments representing tracked objects.

Here, a description will be given of a hypothetical case where a cluster of segments representing a tracked object is selected only based on the distance between the predicted position of the tracked object and each segment. In this case, since the segment s4 is farther from the predicted position than the segment s5, the segment s4 cannot be detected as a segment representing the tracked object while the segment s5 is excluded, regardless of the setting of the above-described predetermined distance.

FIG. 6 is an example of a flowchart illustrating a detailed procedure of a tracked object detection process that is executed by the object detection unit 16. The object detection unit 16 executes the flowchart shown in FIG. 6 at step S13 of the flowchart in FIG. 4.

First, the object detection unit 16 calculates distances for all possible combinations between the predicted position of a tracked object, which is detected as the tracked object at the previous treatment time and whose predicted position at the current processing time is calculated, and any segment detected by the segment detection unit 15 based on the point cloud data at the current processing time (step S21). For example, when there are three tracked objects described above and ten segments described above, there are thirty (= 3 × 10) sets of the tracked object and segment, and the distance between the predicted position and the segment corresponding to each set is calculated. In this case, for example, the object detection unit 16 calculates the above-described distance based on the position of the center of gravity of each segment.

Next, the object detection unit 16 overwrites the distance of any set of the tracked object and the segment existing on the different lanes with a second predetermined value (step S22). In this instance, for example, based on the lane map LM, the object detection unit 16 changes, into the second predetermined value, the distance of any set corresponding to a segment existing on a different lane from the predicted position of the tracked object, among all sets of the tracked object and the segment. In this instance, the second predetermined value is a value equal to or greater than the first predetermined value used at step S25 described below. Thus, the object detection unit 16 prevents any segment existing on the lane different from the predicted position from being detected as a part of the tracked object. In some embodiments, in consideration of the vehicle's lane change, even if the segment exists in a lane other than the lane of the predicted position of the tracked object, the object detection unit 16 may not perform the above-described overwriting process as long as the lane of the segment and the lane of the predicted position of the tracked object are in the same moving direction.

The object detection unit 16 executes the following processes at step S23 to step S29 for each tracked object. First, the object detection unit 16 selects the set having the shortest distance among the sets of the tracked object and the segment (step S23). In this instance, the object detection unit 16 determines that the selected set exists (step S24; No), and proceeds to the process at step S25. Then, the object detection unit 16 determines whether or not the distance of the selected set is equal to or larger than the first predetermined value (step S25). Here, the first predetermined value is determined, for example, in consideration of the size of the tracked object (e.g., an automobile) and/or the error information regarding the predicted position of the tracked object outputted in Kalman filter. Upon determining the distance of the selected set is equal to or larger than the first predetermined value (step S25; Yes), the object detection unit 16 finishes associating the segment with the tracked object (step S29). Thus, a cluster of segments at the current processing time corresponding to each target tracked object is determined.

On the other hand, upon determining that the distance of the selected set is shorter than the first predetermined value (step S25; No), the object detection unit 16 determines whether or not the segment of the selected set is already associated with another tracked object (step S26). Upon determining that the segment of the selected set is already associated with another tracked object (step S26; Yes), the object detection unit 16 determines that the selected set should not be associated with the target track object, and proceeds to the process at step S28. On the other hand, upon determining that the segment of the selected set is not associated with another tracked object (step S26; No), the object detection unit 16 associates the segment of the selected set with the tracked object (step S27). In other words, the object detection unit 16 detects the segment of the selected set as a segment indicating a part of the tracked object relating to the selected set.

Then, at step S28, the object detection unit 16 selects the set having the next-shorter distance (step S28). If there is no set to be selected (step S24; Yes), the object detection unit 16 finishes associating the segment with the tracked object (step S29). Thus, a cluster of segments at the current processing time corresponding to the target tracked object is determined.

### (4) New Object Detection Process

Next, the details of the new object detection process will be described. In the new object detection process, the object detection unit 16 performs a clustering of the segments that are not associated with any tracked objects in the tracked object detection process, and detects a cluster of the segments formed through the clustering as a new tracked object. In this instance, on the basis of the lane map LM, the object detection unit 16 prohibits segments existing across different lanes from being detected as a same object. Thus, the object detection unit 16 suitably suppresses detecting a mass of segments existing across lanes opposite to each other or the like as a single object.

FIG. 7 is a diagram illustrating regions of lanes based on the lane map LM and segments s11 to s17 detected on the lanes. Here, there are illustrated a region of the lane A within the field of view Rv and a region of the lane B within the field of view Rv, wherein the lane B is an oncoming lane (i.e., the lane in which the moving direction is the opposite direction) opposite to the lane A. In addition, there is a vehicle 7C bordered by a rectangular frame in the lane A, and there is a vehicle 7D bordered by a rectangular frame in the lane B. Here, for convenience of explanation, it is assumed that both the vehicle 7C and the vehicle 7D are objects which have not been detected at the previous processing time.

In this instance, the segment s14 is away from the segments s11 to s13 further than the segments s15 to s17. Therefore, when an arbitrary clustering method is executed, it is difficult to perform the clustering so as to separate the segments s11 to s14 corresponding to the vehicle 7C from the segments s15 to s17 corresponding to the vehicle D.

In consideration of the above, based on the lane map LM, the object detection unit 16 prohibits detecting a segment on the lane A and a segment on the lane B, which is the opposite lane of the lane A, as the same object. Thus, the object detection unit 16 can perform clustering so as to separate the segments s11 to s14 corresponding to the vehicle 7C and the segments s15 to s17 corresponding to the vehicle D.

FIG. 8 is an example of a flowchart illustrating a detailed procedure of the new object detection process that is executed by the object detection unit 16. The object detection unit 16 executes the flowchart shown in FIG. 8 at step S14 of the flowchart shown in FIG. 4.

First, among the segments generated by the segment detection unit 15 at the present processing time, the object detection unit 16 excludes the segments, which have been associated in the immediately preceding tracked object detection process, with the tracked objects from the processing target (step S31). Next, the object detection unit 16 makes all possible pairs of the segments (set of two segments) to be processed and calculates the distance for each pair (step S32). If the number of segments to be processed is N (where N is an integer greater than or equal to 2), the distances for _{N}C₂ pairs are calculated. If the number of segments to be processed is one or less, the process proceeds to step S39. In some embodiments, the object detection unit 16 detects segments, which are not associated with tracked objects through any of the tracked object detection process and the new object detection process, as segments representing new tracked object(s).

Next, the object detection unit 16 overwrites the distance of any pair of segments existing across different lanes with the second predetermined value (step S33). Thus, the object detection unit 16 prevents any segments existing on different lanes from being detected as the same object. In consideration of vehicle's lane change, even if the pair of segments exist on different lanes, the object detection unit 16 may not apply the above-described overwriting process to the pair of segments existing on the lanes having the same moving direction.

Next, the object detection unit 16 selects the pair having the shortest distance among the pairs of segments (step S34). In this instance, the object detection unit 16 determines that there is a pair to be selected (step S35; No), and proceeds to the process at step S36. Then, the object detection unit 16 determines whether or not the distance between the selected pair is equal to or larger than the first predetermined value (step S36). For example, the first predetermined value is herein determined in consideration of the size of the tracked object (e.g. automobile). Upon determining that the distance between the selected pair is equal to or larger than the first predetermined value (step S36; Yes), the object detection unit 16 finishes associating the segments with the object newly detected at the current process time (step S39). A cluster of segments at the current processing time corresponding to a new tracked object is determined.

On the other hand, upon determining that the distance between the selected pair is less than the first predetermined value (step S36; No), the segments of the selected pair is set as segments representing the same object (step S37). In other words, the object detection unit 16 regards the selected pair of the segments as the same cluster representing the same object.

Then, at step S38, the object detection unit 16 selects the pair with the next shorter distance (step S38). Here, if there is no pair to be selected (step S35; Yes), the object detection unit 16 performs a process of determining a set of segments corresponding to an object from pair(s) of segments identified as the same object and single segments not associated yet (step S39). If there are plural objects that have not been tracked until now, the process at step S39 corresponds to the process of determining the correspondence between one or more segments and each object. For example, assuming that there are segments "s1" to "s5" that are not associated with the tracked objects, each pair of "s1 and s2", "s2 and s3", and "s1 and s3" is identified as segments of the same object before the process at step S39. In this instance, the object detection unit 16 finally determines that "s1 and s2 and s3", "s4", and "s5" correspond to different objects (that is, there are three newly detected objects).

### (5) Modifications

The lidar unit 100 may be mounted on the vehicle. In this instance, the lidar 3 is provided in a vehicle, and the information processing device 1 is an in-vehicle device of the vehicle or an electronic control device (ECU: Electronic Control Unit) incorporated in the vehicle. In this case, the information processing device 1 detects, based on the point cloud data which the lidar 3 generates, an object (e.g., a vehicle in the vicinity) around the vehicle on which the lidar unit 100 is mounted. Even in this case, the information processing device 1 can accurately perform the process of tracking an object in the vicinity of the vehicle on which the lidar unit 100 is mounted.

In some embodiments, the lane map LM may be a map indicating not only regions of lanes on which vehicles travel but also any other movement regions (regions for movement) such as bicycle lanes and sidewalks (and their moving directions when the moving directions are designated). Even in this case, based on the lane map LM, the information processing device 1 can accurately track an object by prohibiting the segments existing in the different movement regions from being identified as the same object. The lane map LM is an example of "movement region information".

As described above, the controller 13 of the information processing device 1 according to this embodiment mainly functions as a first acquisition unit, a second acquisition unit, and an object detection unit. The first acquisition unit is configured to acquire point cloud data which is a set of data for each point measured by a measurement device. The second acquisition unit is configured to acquire movement region information regarding regions where objects moves on a horizontal plane in a measurement range of the measurement device. The object detection unit is configured to detect, based on the movement region information, a cluster of data for each object from the point cloud data. Thus, the information processing device 1 can accurately track objects.

### <Second Embodiment>

In the second embodiment, a description will be given of the the information processing device 1A that generates the tracked object information IT described in the first embodiment. The information processing device 1A may be the same device as the information processing device 1 according to the first embodiment, or may be a different device from the information processing device 1.

### (1) Configuration of Information Processing Device

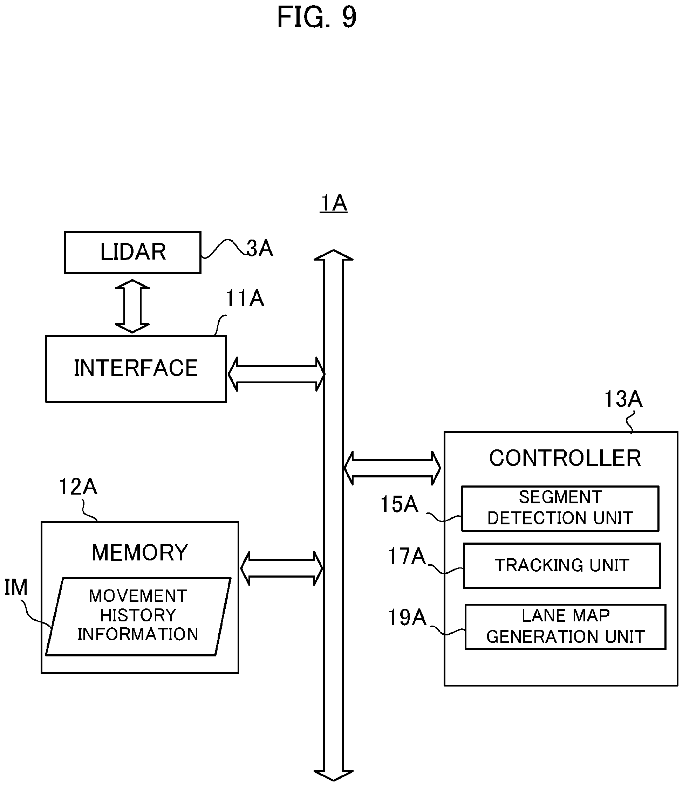

FIG. 9 is a block diagram illustrating an example of a hardware configuration of the information processing device 1A according to the second embodiment. The information processing device 1 mainly includes an interface 11A, a memory 12A, and a controller 13A. Each of these elements is connected to each other through a bus line.

The interface 11A performs interface operations related to the transfer of data between the information processing device 1A and an external device. In the present embodiment, the interface 11A acquires the output data of the sensors including the lidar 3A, and supplies the output data to the controllers 13A. The interface 11A may also perform interface operations of various peripheral devices, such as an input device, a display, a sound output device, and the like.

The memory 12A is configured by various volatile memories and non-volatile memories such as a RAM, a ROM, a hard disk drive, and a flash memory. The memory 12A stores a program for the controller 13A to perform a predetermined process.

The memory 12A stores information required for the controller 13A to perform a predetermined processing. For example, in the second embodiment, the memory 12A stores the movement history information IM.

The movement history information IM is information regarding the movement of the tracked objects and is generated based on the tracking result of the objects. For example, the movement history information IM is information indicating at least the position and the movement direction of each tracked object in time series at intervals of the frame cycle in which the point cloud data is obtained. Further, the movement history information IM may further include information indicating the type (class) of each tracked object.

The controller 13A includes one or more processors, such as a CPU, a GPU, a TPU, and controls the entire information processing device 1. In this case, the controller 13A executes the programs stored in the memory 12A or the like to execute various processes to be described later. The controllers 13A functionally include a segment detection unit 15A, a tracking unit 17A, and a lane map generation unit 19A.

The segment detection unit 15A extracts a segment which is a set of data adjacent to one another from the point cloud data generated at the frame cycle corresponding to the current process time. The process performed by the segment detection unit 15A is the same as the process performed by the segment detection unit 15 in the first embodiment.

The tracking unit 17A performs object tracking based on segments in time series. In this instance, the tracking unit 17A uses the segments in time series and an arbitrary object tracking model, and determines whether or not segments detected at consecutive frame cycles represent the same object. The object tracking model may be a model based on a Kalman filter or may be a model based on deep learning. In this instance, the tracking unit 17A may determine the representative points of respective segments and perform tracking on the basis of the representative points. The representative point in this case may be the center of gravity position of the segment or may be a measured point corresponding to a specific portion of the object. In other instances, the tracker 17A may set bounding boxes for the segments and perform the tracking based on the bounding boxes.

The tracking unit 17A also generates the movement history information IM based on the tracking result of the tracked objects. In this case, for example, the tracking unit 17A generates information (records) indicating at least the positions and the movement directions of the respective tracked objects, which are identified by the tracking result of the tracked objects, per frame cycle and stores the information as the movement history information IM in the memory 12A. The tracking unit 17A may further include classification information regarding the tracked objects in the travel history information IM.

In some embodiments, in the same way as the object detection unit 16 according to the first embodiment does, the tracking unit 17A may generate clusters of segments based on the distances among the segments and identify each generated cluster as a tracked object. In addition, in the same way as the object detection unit 16 according to the first embodiment does, the tracking unit 17A may classify the detected tracked objects to determine the classes of the tracked objects.

The lane map generation unit 19A generates the lane map based on the movement history information IM. In this instance, the lane map generation unit 19A sets a two-dimensional space which is the field of view Rv viewed from directly above, and defines virtual grids (grid cells) by meshing the two-dimensional space at predetermined intervals in respective dimensions. The lane map generation unit 19A aggregates the movement directions of the tracked objects according to the movement history information IM for each grid cell, and estimates the position of the lane and the movement direction on the lane based on the aggregated result. The lane map generation unit 19A stores the estimation result regarding the position of the lane for each grid cell and the moving direction on the lane as the lane map in the memory 12A. This lane map is used as the lane map LM in the first embodiment.

Then, the controllers 13A functions as the "acquisition unit", the "first generation unit" and the "second generation unit" and the computer which executes a program.

### (2) Generation of Lane Maps

Next, a specific example of a method of estimating the position of the lane for each grid cell and the moving direction on the lane will be described.

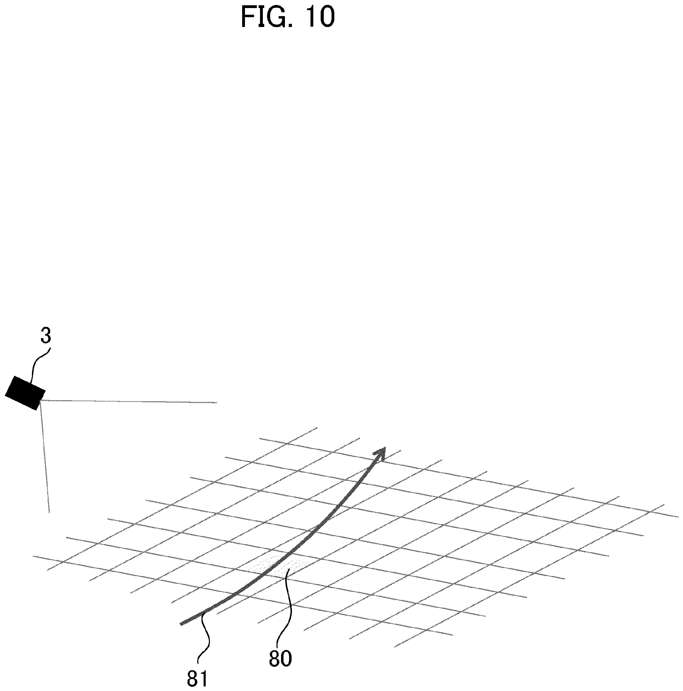

FIG. 10 illustrates the two-dimensional space which is the field of view Rv viewed from directly above wherein the track (locus) of the movement of a tracked object is indicated by an arrow 81 on virtual grids.

Based on the movement history information IM, the lane map generation unit 19A identifies grid cells through which tracked objects has passed and the movement direction in each grid cell, and aggregates the movement directions of all tracked objects for each grid cell. For example, in the example shown in FIG. 10, the lane map generation unit 19A detects the grid cells overlapping with the arrow 81 as the grid cells through which the tracked object has passed, and counts the movement in the moving direction indicated by the arrow 81 for each of the detected grid cells. In this instance, for example, with reference to the classification information of the movement history information IM, the lane map generation unit 19A performs the above-described aggregation only based on the movement history regarding particular class(es) (e.g., an automobile).

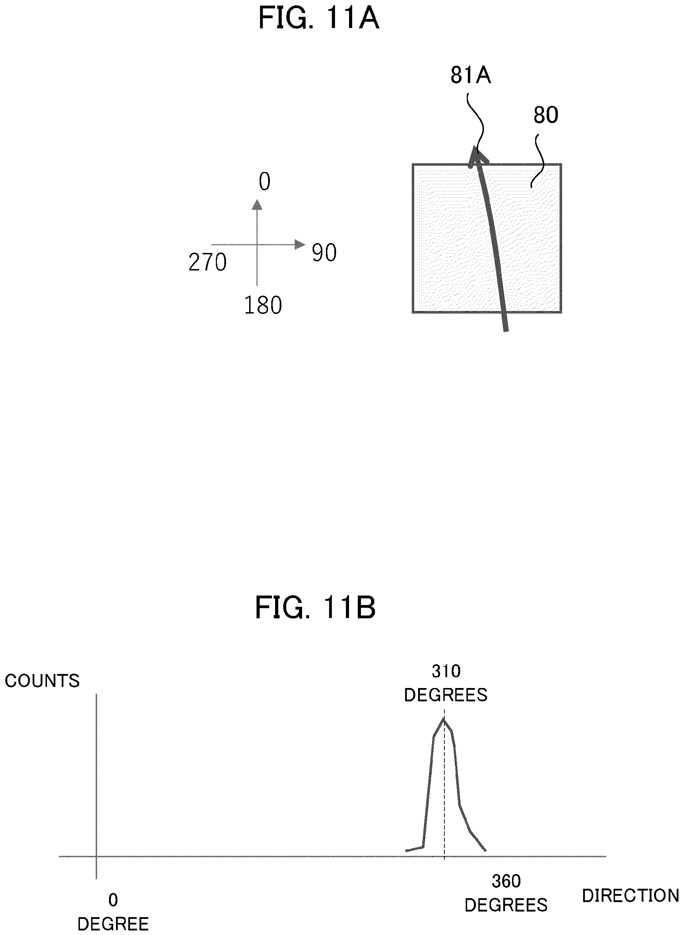

FIG. 11A illustrates an enlarged view of the grid cell 80 with an indication of the moving direction of the tracked object described above by an arrow 81A. FIG. 11B illustrates a histogram of the movement directions in the grid cell 80.

For the tracked object shown in FIG. 10, as shown in FIG. 11A, the lane map generation unit 19A counts that the movement of the tracked object in the moving direction which is 350 degrees has occurred once in the grid cell 80. Then, the lane map generation unit 19A aggregates the moving directions of the tracked objects that passed through the grid cell 80 on the grid cell 80 based on the movement history information IM and generates the histogram illustrated in FIG. 11B. Then, the lane map generation unit 19A determines the moving direction on the grid cell 80 to be 310 degrees which is the most frequent degree. In some embodiments, instead of determining the moving direction to be the most frequent degree, the lane map generation unit 19A may determine the representative moving direction in the grid high 80 based on any statistical method (e.g., a median value, an average value, or the like after excluding outliers). In addition, the lane map generation unit 19A determines that any grid cell in which the number of objects which have passed is less than a predetermined number does not constitute a lane.

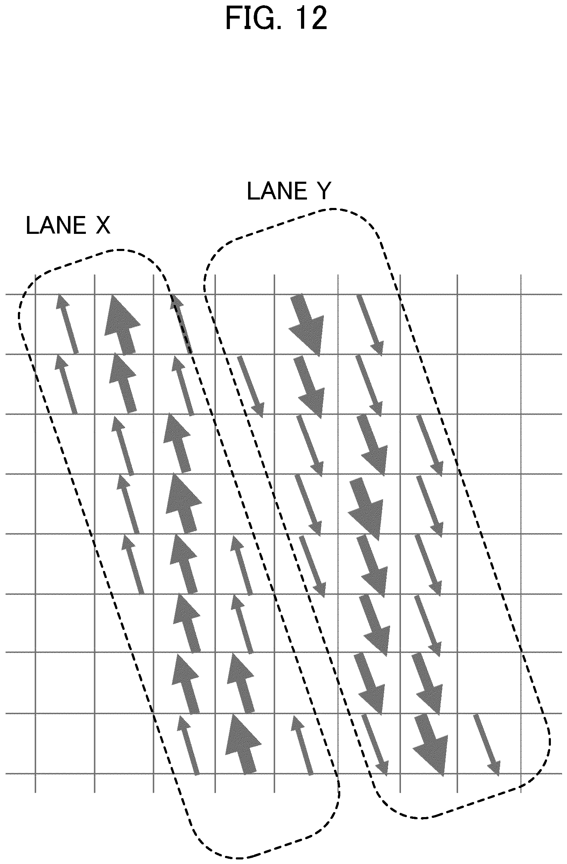

FIG. 12 is a diagram illustrating the moving directions and the frequency of the moving directions on respective grid cells included in the field of view Rv. In FIG. 12, the direction of each arrow indicates the most frequently generated moving direction, and the thickness of the arrow increases with an increase in the number of occurrences. Further, the arrow is not shown in any grid cell in which the number of times the object has passed is less than a predetermined number of times. In FIG. 12, the ranges of the actually existing lane X and lane Y are respectively indicated by broken lines. It is herein assumed that the lane X is an oncoming lane of the lane Y.

In general, if a grid cell is on a roadway (excluding an intersection), the moving directions corresponding to the actual lanes are considered to appear frequently. It is also noted that the frequency of the passage of objects is likely to increase in the center part of an actual lane while the frequency of the passage of objects between lanes (e.g., directly above the centerline) is likely to decrease. These features are considered to remarkably appear on the grids of two-dimensional space according to the arrangement of the actual roadway. In the example shown in FIG. 12, thick arrows indicating that the passage frequency of objects is high appear in each central portion of the lane X and the lane Y while they do not appear between the lane X and the lane Y due to the low passage frequency of the objects.

Taking the above into consideration, the lane map generation unit 19A generates the lane map based on the moving directions calculated for each grid cell. In this instance, based on the representative moving direction and the representative position of each grid cell, the lane map generation unit 19A performs clustering on the grid cells in which the number of passing objects is equal to or more than a predetermined number. In this situation, for example, the lane map generation unit 19A performs the clustering so as to make neighboring grid cells having similar moving directions a cluster. Then, the lane map generation unit 19A identifies a cluster of grid cells formed by clustering as a lane, and determines a lane ID and a moving direction for each cluster of grid cells. Then, the lane map generation unit 19A generates the lane map indicating the lane ID and the moving direction for each grid cell determined to be the lane.

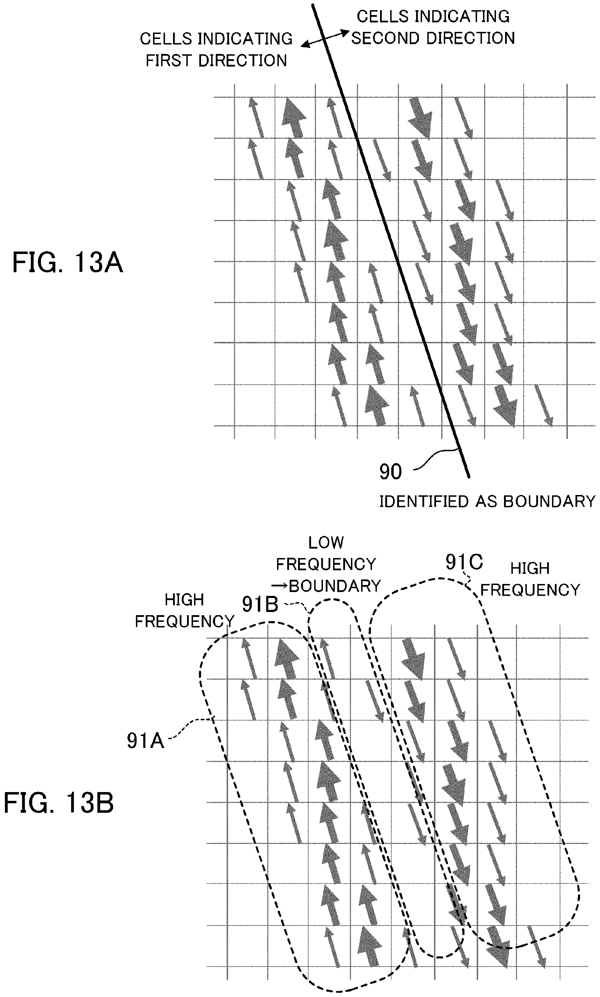

Here, a method of determining the boundary of the lanes will be specifically described with reference to FIGS. 13A and 13B.

FIG. 13A is a diagram showing an outline of a first determination method of a boundary of lanes. In the first determination, the lane map generation unit 19A determines that grid cells existing between grid cells in which frequently occurring moving directions are opposed to each other correspond to a boundary of lanes. In FIG. 13A, the moving directions of the grid cells on the left side of the line 90 approximate the first direction (approximately 330 degrees), the moving directions of the grid cells on the right side of the line 90 approximate the second direction (approximately 150 degrees). In this way, the moving directions of the objects are opposed with respect to the line 90. Therefore, the lane map generation unit 19A estimates that the line 90 (the grid cells overlapping with the line 90) and its vicinity corresponds to the boundary of the lanes.

FIG. 13B is a diagram showing an outline of a second determination method of a boundary of lanes. In the second determination, through comparison with surrounding grid cells, the lane map generation unit 19A determines that grid cells each corresponding to a local minimum of passing frequency or grid cells existing between the grid cells each corresponding to a local maximum of passing frequency constitute the boundary of the lanes. As indicated by the presence of arrows and the thickness of the arrows in FIG. 13B, the grid cells surrounded by the dashed line frame 91A and the dashed line frame 91C have the passage frequency higher than a predetermined degree, whereas the grid cells surrounded by the dashed line frame 91B existing between them have the passage frequency lower than the predetermined degree. Therefore, in this instance, the lane map generation unit 19A estimates that the grid cells surrounded by the broken line frame 91B correspond to the boundary of the lanes. Thus, the lane map generation unit 19A can estimate that a boundary between lanes exists based on the distribution of frequent regions and infrequent regions according to the frequency of object passage (without considering the moving direction).

In some embodiments, using such constraints that each lane forms a straight line or a smoothly curved line, the lane map generation unit 19A may level the lane information among the grid cells or interpolate information regarding grid cells having a small amount of data (passage number) with neighboring grid cells.

### (3) Modification

The information processing device 1A may generate a map indicating movement regions (and their moving directions) such as a sidewalk and a bicycle lane in addition to or instead of generating the lane map relating to a lane through which vehicles pass. It is noted that, when the moving direction of the objects is not determined in one direction as in a sidewalk, there are a plurality of peaks of the moving directions in the histogram. In this instance, for example, the information processing device 1A may not determine the representative moving direction of such a grid cell in which there are a plurality of movement directions having a predetermined degree of frequency or more in the histogram, or may determine plural representative moving directions thereof corresponding to plural peaks in the histogram.

In the embodiments described above, the program is stored by any type of a non-transitory computer-readable medium (non-transitory computer readable medium) and can be supplied to a control unit or the like that is a computer. The non-transitory computer-readable medium include any type of a tangible storage medium. Examples of the non-transitory computer readable medium include a magnetic storage medium (e.g., a flexible disk, a magnetic tape, a hard disk drive), a magnetic-optical storage medium (e.g., a magnetic optical disk), CD-ROM (Read Only Memory), CD-R, CD-R/W, a solid-state memory (e.g., a mask ROM, a PROM (Programmable ROM), an EPROM (Erasable PROM), a flash ROM, a RAM (Random Access Memory)).

While the present invention has been described with reference to the embodiments, the present invention is not limited to the above embodiments. Various modifications that can be understood by a person skilled in the art can be made to the configuration and details of the present invention within the scope of the present invention. Namely, the present invention includes, of course, various modifications that may be made by a person skilled in the art according to the entire disclosure including claims and technical ideas. In addition, all Patent and Non-Patent Literatures mentioned in this specification are incorporated by reference in its entirety.

### DESCRIPTION OF REFERENCE NUMERALS

- 1, 1A: Information processing device
- 2: Sensor group
- 3: Lidar
- 100: Lidar unit

## Claims

1. An information processing device comprising:
a first acquisition unit configured to acquire point cloud data, which is a set of data for each point measured by a measurement device;
a second acquisition unit configured to acquire movement region information regarding movement regions where objects move on a horizontal plane in a measurement range of the measurement device; and
an object detection unit configured to detect, based on the movement region information, a cluster of the data for each object from the point cloud data.

2. The information processing device according to claim 1,
wherein the object detection unit is configured to prohibit the data existing on different movement regions from being detected as the cluster representing a same object.

3. The information processing device according to claim 2,
wherein the movement regions are lanes, and
wherein the object detection unit is configured to prohibit the data existing on different lanes from being detected as the cluster representing the same object.

4. The information processing device according to claim 3,
wherein, if a moving direction of a first lane and a moving direction of a second lane indicated by the movement region information are different, the object detection unit is configured to prohibit the data on the first lane and the data on the second lane from being detected as the cluster representing the same object.

5. The information processing device according to any one of claims 1 to 4,
wherein, in a case of detecting, based on a predicted position of a tracked object detected at a past processing time, the cluster corresponding to the tracked object at a current processing time, the object detection unit is configured to exclude the data existing in a different movement region from the predicted position and detect the cluster.

6. The information processing device according to claim 5,
wherein, in a case of detecting, based on the data which does not correspond to an object detected at a past processing time, the cluster corresponding to another object newly detected at a current processing time, the object detection unit is configured to prohibit the data existing on different movement regions from being detected as the cluster representing the same object.

7. The information processing device according to any one of claims 1 to 6, further comprising
a segment extraction unit configured to extract segments representing sets of data,
wherein the object detection unit is configured to detect one or more segments for each object as the cluster.

8. An information processing device comprising:
an acquisition unit configured to acquire point cloud data, which is a set of data for each point measured by a measurement device;
a first generation unit configured to generate movement history information for each position on a horizontal plane in a measurement range of the measurement device, the movement history information indicating moving directions of objects, which passed through the each position, at the each position; and
a second generation unit configured to generate, based on the movement history information, movement region information according to any one of claims 1 to 7.

9. A control method executed by a computer, the control method comprising:
acquiring point cloud data, which is a set of data for each point measured by a measurement device;
acquiring movement region information regarding movement regions where objects move on a horizontal plane in a measurement range of the measurement device; and
detecting, based on the movement region information, a cluster of the data for each object from the point cloud data.

10. A program causing a computer to:
acquire point cloud data, which is a set of data for each point measured by a measurement device;
acquire movement region information regarding movement regions where objects move on a horizontal plane in a measurement range of the measurement device; and
detect, based on the movement region information, a cluster of the data for each object from the point cloud data.

11. A storage medium storing the program according to claim 10.
